# EUROPÄISCHE PATENTSCHRIFT

(11) **EP 1 334 866 B1**
(45) Veröffentlichungstag und Bekanntmachung des Hinweises auf die Patenterteilung: **27.10.2004**
(21) Anmeldenummer: 03002350.1
(22) Anmeldetag: 04.02.2003
(51) Int. Cl.: B60N 2/20

(54) **Beschlag für einen Fahrzeugsitz**
Hinge for a vehicle seat
Articulation pour un siège de véhicule

(30) Priorität: 11.02.2002 DE 10206303
(43) Veröffentlichungstag der Anmeldung: 13.08.2003
(73) Patentinhaber: KEIPER GmbH & Co. KG, 67657 Kaiserslautern (DE)
(72) Erfinder: Osbahr, Thorsten, 45481 Mühlheim an der Ruhr (DE); Schüler, Rolf, 42579 Heiligenhaus (DE); Voss, Heinz, Dr., 51375 Leverkusen (DE)
(74) Vertreter: Patentanwälte Hosenthien-Held und Dr. Held

(56) Entgegenhaltungen:
- DE-A- 3 828 659
- DE-A- 19 913 432
- FR-A- 2 494 574
- GB-A- 2 358 132

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Aus der gattungsgemäßen DE 199 13 432 A1 ist ein Beschlag dieser Art für ein zweitüriges Kraftfahrzeug bekannt, welcher dazu dient, durch das vorwärts erfolgende Freischwenken der Lehne den Zugang zum Fond zu ermöglichen und für den Gebrauch durch einen Insassen verschiedene Neigungseinstellungen der Lehne zur Verfügung zu stellen. Um ein ungewolltes Zurückschwenken, beispielsweise bei einer zu starken Polsterung im Übergangsbereich zwischen der Lehne und dem Sitzteil, zu verhindern, ist in der freigeschwenkten Stellung eine kraftschlüssige Sicherung der Lehne vorgesehen. Hierzu ist an einer Sicherungsklinke eine Rolle angebrachte, welche mit einer unterteilfesten Rastplatte zusammenwirkt. Eine an der Sicherungsklinke eingehängte Zugfeder sichert in der freigeschwenkten Stellung die Sicherungsklinke gegen ein Öffnen.

In der FR 2 494 574 A wird ein zentral gelagerter, radial verschieblicher Riegel zum sichern der freigeschwenkten Stellung vorgeschlagen. Gemäß der GB 2 358 132 A sichert eine am Unterteil gelagerte Klinke die freigeschwenkte Stellung. In der DE 38 28 659 A1 erfolgt die Sicherung der Tischstellung mittels eines am Oberteil gelagerten Sperrhebels und eines drehfest an der Lehne angebrachten Hakens.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Durch das Festlegen an dem am Unterteil abgestützten Sicherungselement erfolgt die Sicherung der Lehne in einer Stellung, die von der zuvor eingestellten Neigung der Lehne zumindest näherungsweise unabhängig ist. Der Begriff "Festlegen" soll in diesem Zusammenhang auch lösbare Sicherungen/Verbindungen umfassen, die nur in eine Richtung formschlüssig und ansonsten durch Vorspannungen oder dergleichen in der festgelegten Position gehalten werden. Unter "Freischwenken" im weiteren Sinne soll auch der Übergang in eine Tischstellung fallen. Mit dem freischwenkteilfesten Sperrnocken zusammenwirkenden Sperrelement, welches die Sicherungsklinke in der freigeschwenkten Stellung gegen ein Öffnen sichert, ist gewährleistet, daß unabhängig von Reibwerten, Geometrien und anderen Randbedingungen die Sicherungsklinke in der sichernden Stellung bleibt.
Der Sperrnocken oder dergleichen weist in der Regel eine Sperrgeometrie auf, beispielsweise ebene oder gekrümmte Sperrflächen oder Innenecken oder Aufnahmen für einen Formschluß. Die Erfindung ist vorzugsweise bei Fahrzeugsitzen von zweitürigen Kraftfahrzeugen mit zentrischem Freischwenken der Lehne einsetzbar, kann aber auch für andere Fahrzeugsitze verwendet werden.

Das Verlassen der freigeschwenkten Stellung erfolgt vorzugsweise durch einen Benutzerbefehl, aufgrund dessen beispielsweise der auch zum Lösen der Verriegelung zwischen Freischwenkteil und Oberteil vorgesehene Entriegelungsbolzen das Sperrelement mitnimmt, mit dem er vorzugsweise in einer Art Schlitz-Zapfen-Führung gekoppelt ist. Das Sperrelement weist hierfür vorzugsweise eine Entriegelungsgeometrie auf, an welche der Entriegelungsbolzen zu Beginn der Rückkehr von der freigeschwenkten Stellung in die Ausgangsstellung in Anlage gelangt und welche wenigstens teilweise schräg zur Bewegungsrichtung des Entriegelungsbolzens verläuft, so daß der Entriegelungsbolzen das Sperrelement vom Sperrnocken abzieht. Die Entriegelungsgeometrie kann als spezieller Konturverlauf zur präzisen Steuerung des Entriegelungs-Kraft-Weg-Verlauf ausgebildet sein.

Bei einer Verwendung des erfindungsgemäßen Beschlags zur Aktivierung der sogenannten "Easy-Entry-Funktion", bei welcher außer einem Freischwenken der Lehne noch eine Längsverschiebung des Fahrzeugsitzes erfolgt, hat die Erfindung den Vorteil, daß die Lehne beim Vor- und Zurückschieben des Fahrzeugsitzes in der Freischwenkstellung gehalten wird und daher kein ungewolltes Zurückschwenken möglich ist, bei welchem die Sitzschienen in der momentanen Sitzposition statt in der Memory-Position verriegeln würden (ungewollter Reset).

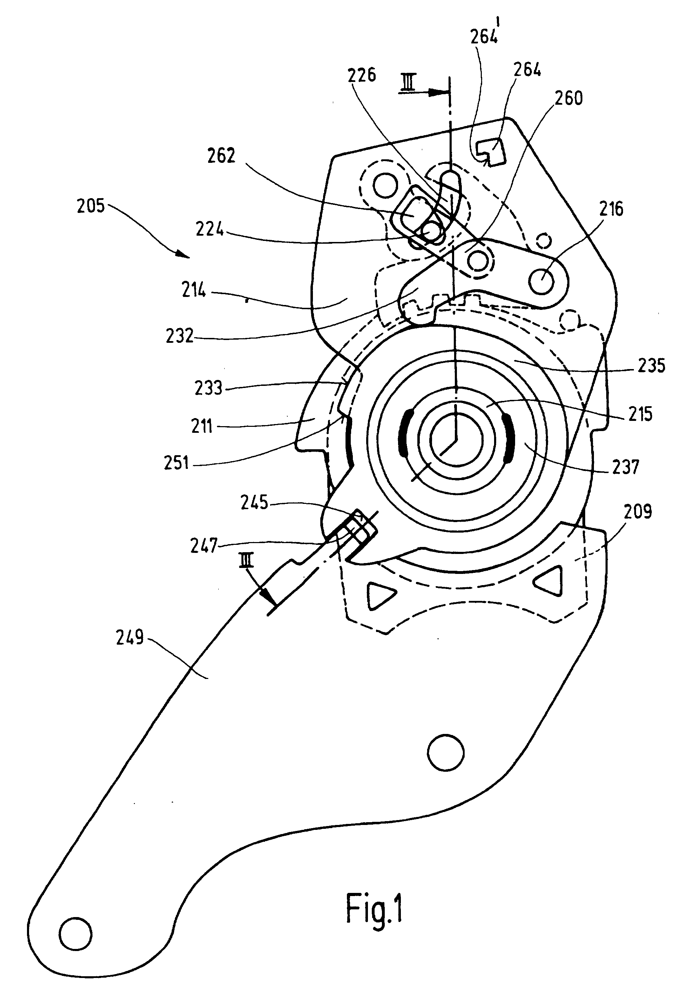

Im folgenden ist die Erfindung anhand eines in der Zeichnung dargestellten Ausführungsbeispiels näher erläutert. Es zeigen
- Fig. 1: eine Seitenansicht des Ausführungsbeispiels in einer Gebrauchsstellung,

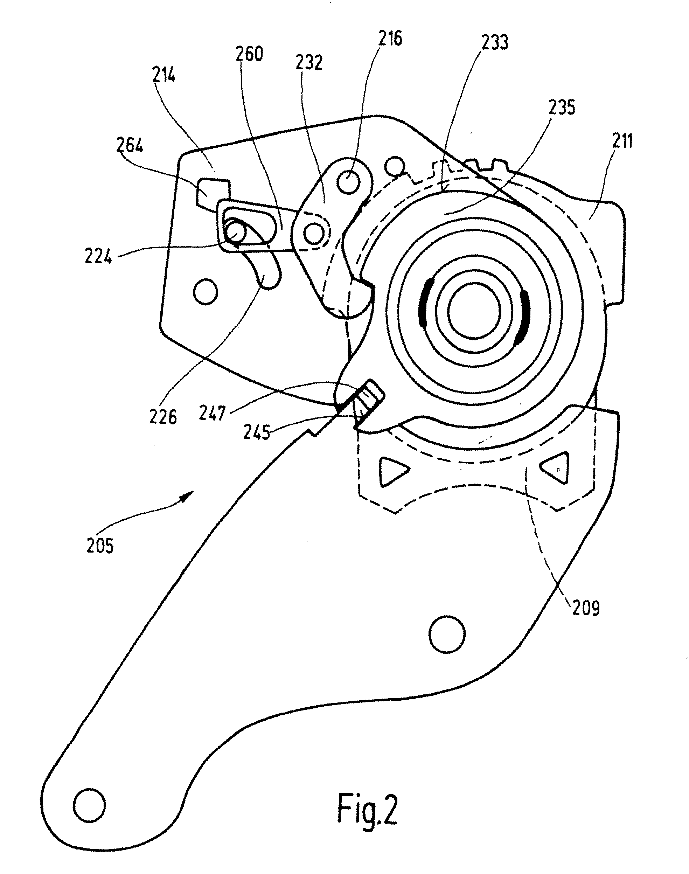

- Fig. 2: eine Ansicht entsprechend Fig. 1 in der freigeschwenkten Stellung,

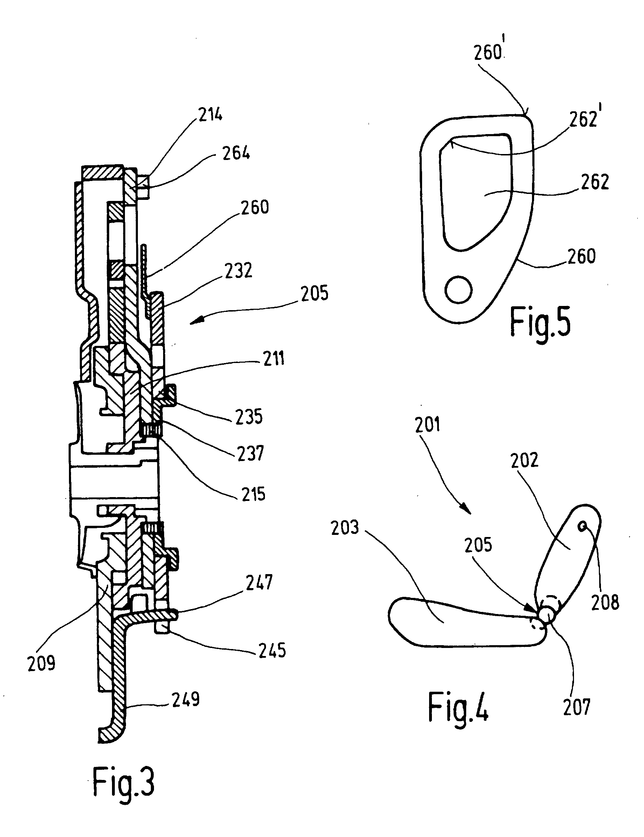

- Fig. 3: einen Schnitt entlang der Linie III-III in Fig. 1,
- Fig. 4: eine schematische Seitenansicht eines Fahrzeugsitzes, und
- Fig. 5: eine vergrößerte Darstellung des Sicherungsblechs.

Ein Fahrzeugsitz 201 für ein zweitüriges Kraftfahrzeug weist für die Neigungseinstellung und das Freischwenken seiner Lehne 202 relativ zu seinem Sitzteil 203 auf seinen beiden Seiten je einen Beschlag 205 auf. Für die Neigungseinstellung zwischen mehreren Gebrauchsstellungen der Lehne 202 ist der Beschlag 205 als ein Getriebebeschlag ausgebildet, welcher im folgenden als Taumelbeschlag bezeichnet ist. Auf der Außenseite des Fahrzeugsitzes 201 ist für diese Neigungseinstellfunktion an einem der Beschläge 205 ein Handrad 207 vorgesehen, während für die Freischwenkfunktion an der Lehne 202 ein Handhebel 208 beweglich angebracht ist.

Jeder Beschlag 205 umfaßt ein mit der Struktur des Sitzteils 203 verbundenes Taumelunterteil 209, ein zur Neigungseinstellung der Lehne 202 relativ zu diesem verdrehbares Taumeloberteil 211 und ein mit der Lehnenstruktur der Lehne 202 verbundenes Freischwenkteil 214.

Das Freischwenkteil 214 ist auf einem vom Taumelunterteil 209 abgewandten Kragenzug 215 des Taumeloberteils 211 gelagert und für das zentrisch erfolgende Freischwenken relativ zum Taumeloberteil 211 um eine zentrale Achse dieses Kragenzuges 215 verschwenkbar, ansonsten aber mit dem Taumeloberteil 211 verriegelt. Hierzu ist auf dem Freischwenkteil 214 in an sich bekannter Weise auf einem Lagerbolzen 216 eine Sperrklinke schwenkbar gelagert, welche in Schließrichtung federbelastet in einen Zahnabschnitt des Taumeloberteils 211 greift und dabei durch einen federbelasteten Spannexzenter gesichert wird. Ein seitlich vom Spannexzenter abstehender Entriegelungsbolzen 224 greift durch eine gekrümmte Kulisse 226 des Freischwenkteils 214. Ein mit dem Handhebel 208 in Wirkverbindung stehender Seilzug ist am Entriegelungsbolzen 224 befestigt. Zum Entriegeln des Freischwenkteils 214 wird über den Seilzug der Entriegelungsbolzen 224 innerhalb der Kulisse 226 geschwenkt, welcher dabei den Spannexzenter mitnimmt, der die Sperrklinke freigibt.

Auf dem Lagerbolzen 216 ist zusätzlich eine Sicherungsklinke 232 schwenkbar gelagert, welche federbelastet an einer Steuerkurve 233 anliegt, welche auf der Außenfläche eines Sicherungsrings 235 ausgebildet ist. Der Sicherungsring 235 ist in einer Ebene parallel zum Freischwenkteil 214 und zum Taumeloberteil 211 lose auf einem axial verlaufenden Teil eines Doppelflanschrings 237 gelagert. Der Doppelflanschring 237 sitzt mit seinem inneren Flansch auf dem Kragenzug 215 des Taumeloberteils 211 und ist mit diesem Kragenzug 215 verschweißt, wobei er zugleich das Freischwenkteil 214 in axialer Richtung sichert. Mit seinem äußeren Flansch hintergreift der Doppelflanschring 237 den Sicherungsring 235 und sichert diesen in axialer Richtung unter Zwischenlage eines Federstahlelementes zur Spielfreistellung.

Am Sicherungsring 235 ist eine sich in radialer Richtung öffnende, von einer gabelförmigen Materialpartie definierte Aufnahme 245 ausgebildet, welche einen Vorsprung 247 aufnimmt, der von einem mit dem Taumelunterteil 209 verschweißten Adapter 249 absteht. Der Adapter 249 bildet die Anbindung des Taumelunterteils 209 an die Struktur des Sitzteils 203. Der Sicherungsring 235 ist somit am Taumelunterteil 209 abgestützt. Die Anordnung des Sicherungsrings 235 ist insofern nahezu unabhängig von der eingestellten Neigung der Lehne 202, daß die bei der Neigungseinstellung der Lehne 202 auftretende Taumelbewegung des Taumeloberteils 211 - und damit der Lagerung des Sicherungsrings 235 - relativ zum Taumelunterteil 209 im Bereich der Aufnahme 245 auf eine Relativbewegung der Aufnahme 245 und des Vorsprungs 247 reduziert und im übrigen in Umfangsrichtung durch die lose Lagerung des Sicherungsrings 235 auf dem Doppelflanschring 237 ausgeglichen wird. In der Nähe der Aufnahme 245 ist im Verlauf der Steuerkurve 233 ein in radialer Richtung ausgebildeter Absatz 251 vorgesehen. Bezüglich der Position des Taumelunterteils 209 und dessen Adapters 249 ist die Position des Absatzes 251 nahezu konstant aufgrund der speziellen Lagerung und Führung des Sicherungsrings 235 mittels der Schlitz-Zapfen-Führung aus Aufnahme 245 und Vorsprung 247 und der Nähe der Schlitz-Zapfen-Führung zum Absatz 251.

An der Sicherungsklinke 232 ist exzentrisch bezüglich des Lagerbolzens 216 als Sperrelement ein Sperrblech 260 angelenkt, welches mittels einer Öffnung 262 in der Art einer Schlitz-Zapfen-Führung den Entriegelungsbolzen 224 umschließt. Der von der Sicherungsklinke 232 weiter entfernt liegende Rand der Öffnung 262 ist als Entriegelungsgeometrie 262' ausgebildet. Oberhalb der Sicherungsklinke 232 ist ein Sperrnocken 264 am Freischwenkteil 214 vorgesehen, beispielsweise ausgeprägt oder angeschweißt.

Im verriegelten Zustand des Beschlags 205 liegt die Sicherungsklinke 232 an einem Abschnitt des Sicherungsrings 235 an, dessen Radius in Freischwenkrichtung anwächst, wobei die genaue Position der Anlagestelle von der eingestellten Neigung der Lehne 202 abhängt. Beim Freischwenken der Lehne 202, welches durch das Entriegeln des Freischwenkteils 214 eingeleitet wird, gelangt die Sicherungsklinke 232 auf einen radial näherungsweise konstant bleibenden Abschnitt der Steuerkurve 233 und bei Erreichen der freigeschwenkten Stellung der Lehne 202 über den radial zurückspringenden Absatz 251 auf einen radial weiter innen gelegenen Abschnitt der Steuerkurve 233. Die federbelastete Sicherungsklinke 232 hintergreift nun den Sicherungsring 235, wodurch die freigeschwenkte Stellung der Lehne 202, welche einen ungehinderten Zugang zum Fond erlaubt, durch diese Teilverriegelung des Beschlags 205 gesichert ist. Da die Position des Absatzes 251 - zumindest weitgehend - konstant ist bezüglich der Position des Taumelunterteils 209 und dessen Adapters 249, wird das Freischwenkteil 214 - und damit die Lehne 202 - in der gleichen Position relativ zum Taumelunterteil 209 - und damit zum Sitzteil 203 - gesichert, also unabhängig von der eingestellten Neigung der Lehne 202.

Wird die Lehne 202 in dieser freigeschwenkten Stellung nach rückwärts belastet, d.h. das Freischwenkteil 214 mit einem Moment relativ zum Sicherungsring 235 beaufschlagt, beispielsweise durch eine Polsterpressung oder in einem Mißbrauchsfall, erfährt die Sicherungsklinke 232 ein öffnendes Moment, da sie aufgrund ihrer Form außerhalb des Selbsthemmungsbereichs mit dem Absatz 251 des Sicherungsrings 235 zusammenwirkt. Das Sperrblech 260 ist in dieser Stellung jedoch so angeordnet, daß es mit seiner vorliegend beispielsweise eckförmigen Sperrgeometrie 260' unmittelbar in Anlage an den Sperrnocken 264 gelangt, der in diesem Anlagebereich eine Innenecke 264' aufweist, wobei die einander berührenden Flächen innerhalb des Selbsthemmungsbereichs zusammenwirken, gegebenenfalls auch formschlüssig zusammenwirken. Die freigeschwenkte Stellung der Lehne 202 ist dadurch unabhängig von äußeren Randbedingungen, wie Geometrien oder Reibwerte, unter allen Bedingungen - außer einem Benutzerbefehl - gesichert.

Die Rückkehr in die zuvor eingenommene Gebrauchsstellung der Lehne 202 erfolgt grundsätzlich in umgekehrter Reihenfolge. Der Entriegelungsbolzen 224 gelangt vor Erreichen des oberen Endes der Kulisse 226 in Anlage an die schräg zu seiner Bewegungsrichtung verlaufende Entriegelungsgeometrie 262'. Daher zieht der Entriegelungsbolzen 224 bei seiner weiteren Bewegung das Sperrblech 260 seitlich vom Sperrnocken 264 ab und mitsamt Sicherungsklinke 232 nach oben. Durch die genaue Form der Entriegelungsgeometrie 262' kann über die Wahl der Hebelverhältnisse ein komfortabler Kraft-Weg-Verlauf erreicht werden. Die Lehne 202 kann nun zurückgeschwenkt werden. Wenn die Ausgangsstellung erreicht ist, wird das Freischwenkteil 214 aufgrund der Federvorspannungen von Sperrklinke und Spannexzenter selbsttätig verriegelt.

### Bezugszeichenliste

- 201: Fahrzeugsitz
- 202: Lehne
- 203: Sitzteil
- 205: Beschlag
- 207: Handrad
- 208: Handhebel
- 209: Taumelunterteil
- 211: Taumeloberteil
- 214: Freischwenkteil
- 215: Kragenzug
- 216: Lagerbolzen
- 224: Entriegelungsbolzen
- 226: Kulisse
- 232: Sicherungsklinke
- 233: Steuerkurve
- 235: Sicherungsring, Sicherungselement
- 237: Doppelflanschring
- 245: Aufnahme
- 247: Vorsprung
- 249: Adapter
- 251: Absatz
- 260: Sperrblech, Sperrelement
- 260': Sperrgeometrie
- 262: Öffnung
- 262': Entriegelungsgeometrie
- 264: Sperrnocken
- 264': Innenecke

## Patentansprüche

1. Beschlag für einen Fahrzeugsitz, insbesondere für einen Kraftfahrzeugsitz, mit einem sitzteilstrukturfesten Unterteil (209), einem relativ zum Unterteil (209) verdrehbaren Oberteil (211) für die Neigungseinstellung der Lehne (202) des Fahrzeugsitzes (201) zwischen mehreren Gebrauchsstellungen, und einem lehnenstrukturfesten, mit dem Oberteil (211) verriegelbaren und für ein zentrisches Freischwenken der Lehne (202) relativ zum Oberteil (211) verschwenkbaren Freischwenkteil (214), welches zur Sicherung der freigeschwenkten Stellung der Lehne (202) am Unterteil (209) festlegbar ist, wobei am Freischwenkteil (214) eine schwenkbare Sicherungsklinke (232) gelagert ist, welche zum Festlegen des Freischwenkteils (214) in der freigeschwenkten Stellung mit einem am Unterteil (209) abgestützten Sicherungselement (235) zusammenwirkt, wobei die Sicherungsklinke (232) in der freigeschwenkten Stellung durch ein Sperrelement (260) gegen ein Öffnen gesichert ist, **dadurch gekennzeichnet, daß** das Sperrelement (260) zum Sichern der Sicherungsklinke (232) mit einem freischwenkteilfesten Spermocken (264) zusammenwirkt.

2. Beschlag nach Anspruch 1, **dadurch gekennzeichnet, daß** zum Lösen der Verriegelung zwischen Freischwenkteil (214) und Oberteil (211) ein in der Schwenkebene des Freischwenkteils (214) beweglicher Entriegelungsbolzen (224) vorgesehen ist.

3. Beschlag nach Anspruch 2, **dadurch gekennzeichnet, daß** das Sperrelement (260) an den Entriegelungsbolzen (224) gekoppelt ist.

4. Beschlag nach Anspruch 2 oder 3, **dadurch gekennzeichnet, daß** das Sperrelement (260) eine Entriegelungsgeometrie (262') aufweist, an welche der Entriegelungsbolzen (224) zu Beginn der Rückkehr von der freigeschwenkten Stellung in die Ausgangsstellung in Anlage gelangt.

5. Beschlag nach Anspruch 4, **dadurch gekennzeichnet, daß** die Entriegelungsgeometrie (262') bei Anlage des Entriegelungsbolzens (224) wenigstens teilweise schräg zur Bewegungsrichtung des Entriegelungsbolzens (224) verläuft.

6. Beschlag nach Anspruch 5, **dadurch gekennzeichnet, daß** der Entriegelungsbolzen (224) bei Anlage an die Entriegelungsgeometrie (262') das Sperrelement (260) vom Sperrnocken (264) abzieht.

7. Beschlag nach einem der Ansprüche 1 bis 6, **dadurch gekennzeichnet, daß** das Sicherungselement (235) einen Absatz (251) zwischen einem vorderen, radial weiter innen gelegenen Abschnitt des Sicherungselementes (235) und einem hinteren, radial weiter außen gelegenen Abschnitt des Sicherungselementes (235) aufweist, wobei in der freigeschwenkten Stellung die, Sicherungsklinke (232) den Absatz (251) hintergreift.

8. Beschlag nach einem der Ansprüche 1 bis 7, **dadurch gekennzeichnet, daß** das Sicherungselement (235) über eine Schlitz-Zapfen-Führung (245, 247) am Unterteil (209) abgestützt ist.

9. Fahrzeugsitz (201) mit einer Lehne (202), **gekennzeichnet durch** einen Beschlag (205) nach einem der Ansprüche 1 bis 8 zur Neigungseinstellung und zum Freischwenken der Lehne (202).

## Claims

1. Fitting for a vehicle seat, in particular for a motor vehicle seat, having a lower member (209) which is secured to the seat member structure, an upper member (211) which can be rotated relative to the lower member (209) for adjusting the inclination of the backrest (202) of the vehicle seat (201) between a plurality of positions for use, and having a freely pivoting member (214) which is secured to the structure of the backrest and which can be locked relative to the upper member (211) and can be pivoted relative to the upper member (211) for a central free pivoting action of the backrest (202) and which can be fixed to the lower member (209) in order to secure the freely pivoted position of the backrest (202), a pivotable securing detent (232) being supported on the freely pivoting member (214) and co-operating with a securing element (235) which is supported on the lower member (209) in order to secure the freely pivoting member (214) in the freely pivoted position, the securing detent (232) being secured against opening in the freely pivoted position by a locking element (260), **characterised in that** the locking element (260) co-operates with a locking cam (264) which is secured to the freely pivoting member in order to secure the securing detent (232).

2. Fitting according to claim 1, **characterised in that** an unlocking pin (224) which can be moved in the pivot plane of the freely pivoting member (214) is provided in order to release the locking action between the freely pivoting member (214) and the upper member (211).

3. Fitting according to claim 2, **characterised in that** the locking element (260) is coupled to the unlocking pin (224).

4. Fitting according to claim 2 or 3, **characterised in that** the locking element (260) has an unlocking geometry (262') with which the unlocking pin (224) comes into contact at the start of the return from the freely pivoted position into the initial position.

5. Fitting according to claim 4, **characterised in that** the unlocking geometry (262') extends in an at least partially inclined manner relative to the movement direction of the unlocking pin (224) when in contact with the unlocking pin (224).

6. Fitting according to claim 5, **characterised in that** the unlocking pin (224) removes the locking element (260) from the locking cam (264) when in contact with the unlocking geometry (262').

7. Fitting according to any one of claims 1 to 6, **characterised in that** the securing element (235) has an indentation (251) between a front portion of the securing element (235) that is located further inwards in a radial direction and a rear portion of the securing element (235) that is located further outwards in a radial direction, the securing detent (232) engaging behind the indentation (251) in the freely pivoted position.

8. Fitting according to any one of claims 1 to 7, **characterised in that** the securing element (235) is supported on the lower member (209) by means of a slot/stud guide (245, 247).

9. Vehicle seat (201) having a backrest (202), **characterised by** a fitting (205) according to any one of claims 1 to 8 in order to adjust the inclination and to freely pivot the backrest (202).

## Revendications

1. Armature pour un siège de véhicule, notamment pour un siège de véhicule automobile, avec une partie inférieure (209) fixée à la structure de cette partie de siège, une partie supérieure (211) pouvant tourner par rapport à la partie inférieure (209) pour le réglage de l'inclinaison du dossier (202) du siège de véhicule (201) entre plusieurs positions d'utilisation, et une partie pivotant librement (214) fixée à la structure du dossier du siège, pouvant être verrouillée à la partie supérieure (211) et pouvant pivoter par rapport à la partie supérieure (211) pour permettre un pivotement libre centré du dossier de siège (202) par rapport à la partie supérieure (211), ladite partie pivotant librement pouvant être fixée à la partie inférieure (209) pour bloquer la position pivotant librement du dossier de siège (202), moyennant quoi un cliquet d'arrêt (232) pivotant est disposé au niveau de la partie pivotant librement (214), lequel entre en prise avec un élément d'arrêt (235) appuyé contre la partie inférieure (209) pour fixer la partie pivotant librement (214) dans la position pivotant librement, moyennant quoi le cliquet d'arrêt (232) est bloqué dans la position pivotant librement par un élément de blocage (260) de manière à ne pas s'ouvrir, **caractérisée par le fait que** l'élément de blocage (260) entre en prise avec une came de blocage (264) fixée à la partie pivotant librement pour bloquer le cliquet d'arrêt (232).

2. Armature selon la revendication 1, **caractérisée par le fait qu'**un boulon de déverrouillage (224) mobile dans le plan de pivotement de la partie pivotant librement (214) est prévu pour relâcher le verrouillage entre la partie pivotant librement (214) et la partie supérieure (211).

3. Armature selon la revendication 2, **caractérisée par le fait que** l'élément de blocage (260) est couplé au boulon de déverrouillage (224).

4. Armature selon l'une des revendications 2 ou 3, **caractérisée par le fait que** l'élément de blocage (260) présente une géométrie de déverrouillage (262') à laquelle appartient le boulon de déverrouillage (224) au début du retour de la position pivotant librement à la position de départ du système.

5. Armature selon la revendication 4, **caractérisée par le fait que** la géométrie de déverrouillage (262') s'étend au moins en partie en biais par rapport au sens de déplacement du boulon de déverrouillage (224) lors de la pose du boulon de déverrouillage (224).

6. Armature selon la revendication 5, **caractérisée par le fait que** le boulon de déverrouillage (224) sort de la came de blocage (264) lors de la pose de l'élément d'arrêt (260) au niveau de la géométrie de déverrouillage (262').

7. Armature selon l'une quelconque des revendications 1 à 6, **caractérisée par le fait que** l'élément d'arrêt (235) présente un renfoncement (251) entre un segment de l'élément d'arrêt (235) avant, disposé plus à l'intérieur d'un point de vue radial, et un segment de l'élément d'arrêt (235) arrière, disposé plus à l'extérieur d'un point de vue radial, moyennant quoi le renfoncement (251) accroche par derrière le cliquet d'arrêt (232) dans la position pivotant librement.

8. Armature selon l'une quelconque des revendications 1 à 7, **caractérisée par le fait que** l'élément d'arrêt (235) s'appuie contre la partie inférieure (209) via un guide à tenon et mortaise (245, 247).

9. Siège de véhicule (201) avec un dossier de siège (202), **caractérisé par** une armature (205) telle que définie à l'une quelconque des revendications 1 à 8 pour le réglage de l'inclinaison et pour le pivotement libre du dossier du siège (202).
